# EUROPÄISCHE PATENTSCHRIFT

(11) **EP 1 574 765 B1**
(45) Veröffentlichungstag und Bekanntmachung des Hinweises auf die Patenterteilung: **10.05.2006**
(21) Anmeldenummer: 04005982.6
(22) Anmeldetag: 12.03.2004
(51) Int. Cl.: F16K 5/06

(54) **Bausatz zur Bereitstellung von Stellgeräten**
Kit for preparing a positioning device
Ensemble pour préparer un dispositif de commande de position

(43) Veröffentlichungstag der Anmeldung: 14.09.2005
(60) Teilanmeldung: 06002789.3
(73) Patentinhaber: JCI REGELUNGSTECHNIK GmbH, D-45143 Essen (DE)
(72) Erfinder: Rahn, Uwe H., 45145 Essen (DE); Obser, Michael, 46219 Essen (DE); Schönwolff, Siegfried, 42579 Heiliegenhaus (DE)
(74) Vertreter: Albrecht, Rainer Harald

(56) Entgegenhaltungen:
- DE-A- 10 064 976
- US-A- 3 743 242
- US-A- 4 079 746
- US-A- 5 429 151

## Beschreibung

Die Erfindung betrifft ein Stellgerät für Rohrleitungen von Heizungs- und Klimaanlagen mit mindestens einem einen Ventilkörper aufweisenden Funktionselement.

Bekannte Stellgeräte beinhalten fest definierte, nachträglich nicht veränderbare Anschlüsse für die Montage an Rohrleitungen. Sowohl die Baulänge eines Stellgerätes (Face-to-face Abmessung) als auch die Ausführung der z. B. als Flansch ausgebildeten Anschlussverbindung bezüglich Flanschdicke, Flanschdurchmesser, Teilkreisdurchmesser für die verwendeten Verbindungsschrauben, Durchmesser und Längen der Schrauben etc., sind vorgegeben. Der Flanschanschluss zu den Rohrleitungen ist daher ein fester Bestandteil des Stellgerätes und kann nicht nachträglich geändert werden. Um die Stellgeräte auf unterschiedlichen, beispielsweise amerikanischen, europäischen und japanischen Märkten, anbieten zu können, benötigt man entsprechend separate Ventilbaureihen, um die jeweils gültigen Baulängen und Flanschabmessungen oder Gewindestandards abdecken zu können.

Dokument DE 10064976 offenbart einen Bausatz gemäß dem Oberbegriff des Anspruchs 1.

Der Erfindung liegt die Aufgabe zugrunde, ein Stellgerät für Rohrleitungen von Heizungs- und Klimaanlagen bereitzustellen, welches flexibel an unterschiedlichen Rohrleitungsstandards angepasst werden kann.

Die Aufgabe wird erfindungsgemäß gelöst durch die Merkmale des Kennzeichnenden Teils.

Erfindungsgemäß wird zum Einbau in Rohrleitungssysteme unterschiedlicher Normen ein universelles Funktionselement verwendet, welches über die austauschbaren Endstücke an das Rohrleitungssystem angeschlossen wird. Die freien Anschlussenden der rohrförmigen Endstücke entsprechen der für die Rohrleitung jeweils geltenden Norm, wobei zusätzlich über die Länge der Endstücke auch eine Anpassung an genormte Baulängen des Rohrleitungssystems erfolgen kann. Entsprechend kann das Funktionselement selbst unabhängig von den für den Rohrleitungsbau geltenden Normen gefertigt werden. Hierdurch ergeben sich beachtliche logistische Vorteile und Kostenvorteile, da die Anpassung des Stellgerätes an die jeweils geltende Rohrleitungsnorm ausschließlich über vergleichsweise einfach herstellbare Endstücke erfolgt. Die freien Anschlussenden und/oder die Länge der rohrförmigen Endstücke werden entsprechend der gewünschten Norm, z. B. DIN, EN, ANSI, ASTM, ISA, ISO etc., gestaltet, wobei die Fertigung und Montage der rohrförmigen Endstücke beispielsweise im Bestimmungsland erfolgen kann, während die vergleichsweise aufwendige Fertigung des Funktionselementes an einem zentralen Standort erfolgt, von dem aus verschiedene Märkte mit Funktionselementen beliefert werden. Je nach geltender Norm weisen die freien Anschlussenden der rohrförmigen Endstücke Flanschanschlüsse, Gewindeanschlüsse mit Innen- oder Außengewinden, Löt- oder Schweißanschlüsse auf.

Vorzugsweise sind die Montageflächen an den Strömungsein- und auslässen identisch ausgebildet. Die Montageflächen können als Montageplatten ausgebildet sein, die umfangsseitig überstehen und in dem überstehenden Rand Bohrungen für Schraubverbindungen enthalten. Das Gehäuse kann hierbei einen zylindrischen oder quaderförmigen Grundkörper aufweisen, der den Ventilkörper enthält, wobei die Montageplatten an den Stirnflächen des Grundkörpers angeschweißt oder angeformt sind.

Die Funktionselemente können zur Erfüllung unterschiedlicher Aufgaben, wie z. B. Verteilung, Regelung oder Absperrung eines Mediums, Durchgangsventile, Mischventile, Trennventile und Mehrwegeventile umfassen, wobei die Montageflächen unabhängig von der Bauart identisch ausgebildet sind. Die Funktionselemente können mit unterschiedlichen Ventilkörpern, z. B. Küken, Ventilkugeln, Klappen, Ventilkegeln oder Schiebern bestückt sein und weisen vorzugsweise Gehäuse mit gleichen oder ähnlichen Abmessungen auf. Ein Austausch von Ventilen ist ohne aufwendige Arbeiten an den Rohrleitungen möglich, da keine Anpassung bezüglich der Baulänge des einzelnen Funktionselementes erforderlich ist. Der Anschlusskopf der rohrförmigen Endstücke kann mit Schraubverbindungen an der Montagefläche befestigbar sein und zur Befestigung Durchgangsbohrungen oder Gewindesackbohrungen enthalten. Der Anschlusskopf der Endstücke und die Montagefläche weisen vorzugsweise Dichtflächen für die Anordnung von Flachdichtungen oder Rundschnürdichtungen auf.

Im Rahmen der Erfindung liegt es ferner, dass zusätzliche Funktionselemente vorgesehen sind, die ein Gehäuse mit Strömungsein- und auslass sowie einen Strömungskanal mit einem gehäusefesten Strömungseinbau, z. B. in Form einer Messblende oder Drossel, aufweisen, wobei der Strömungseinlass und der Strömungsauslass von Gehäuseflächen umgeben sind, die den Montageflächen entsprechen. Die Funktionselemente können auch Druckregler, Rückstandsklappen, Wärmemengenzähler, Volumenstrombegrenzer und dergleichen umfassen. Hierdurch können zur Erfüllung komplexer Aufgaben mehrere Funktionselemente variabel hintereinander geschaltet werden.

Die Erfindung betrifft ferner die Verwendung eines Bausatzes zur Bildung von kompakten Regelstrecken aus mehreren Funktionselementen gemäß Anspruch 10.

Im Folgenden wird die Erfindung anhand einer lediglich ein Ausführungsbeispiel darstellenden Zeichnung ausführlich erläutert. Es zeigen schematisch:
- **Fig. 1a,1b**: einen erfindungsgemäßen Bausatz im unmontierten bzw. montierten Zustand,
- **Fig. 2a,2b**: eine weitere Ausführungsform des erfindungsgemäßen Bausatzes und
- **Fig. 3**: einen Bausatz mit mehreren Funktionselementen im unmontierten Zustand.

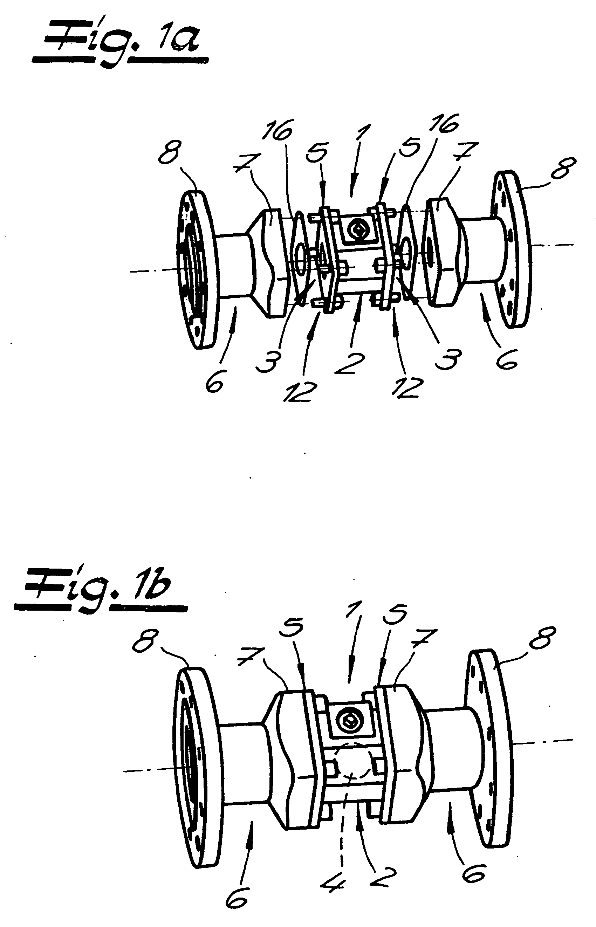

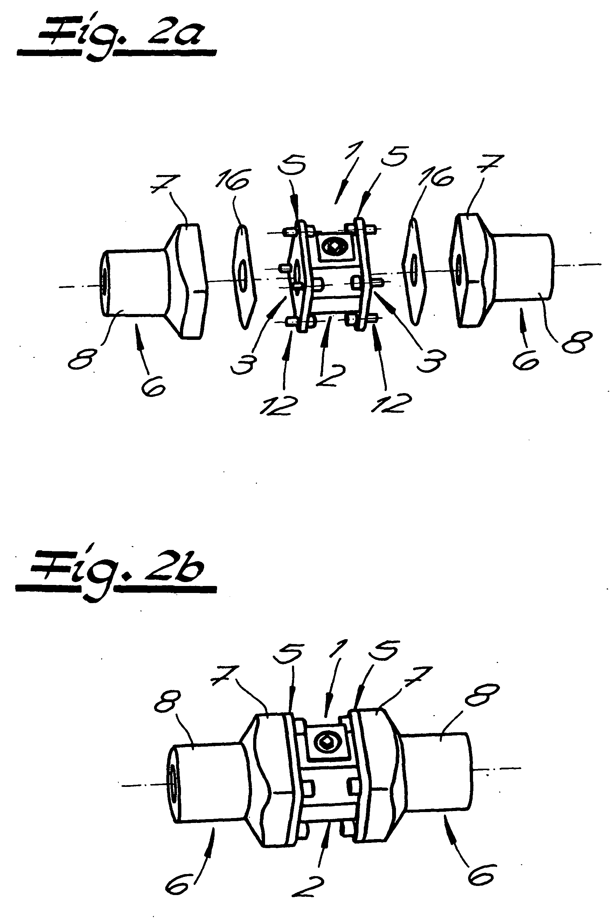

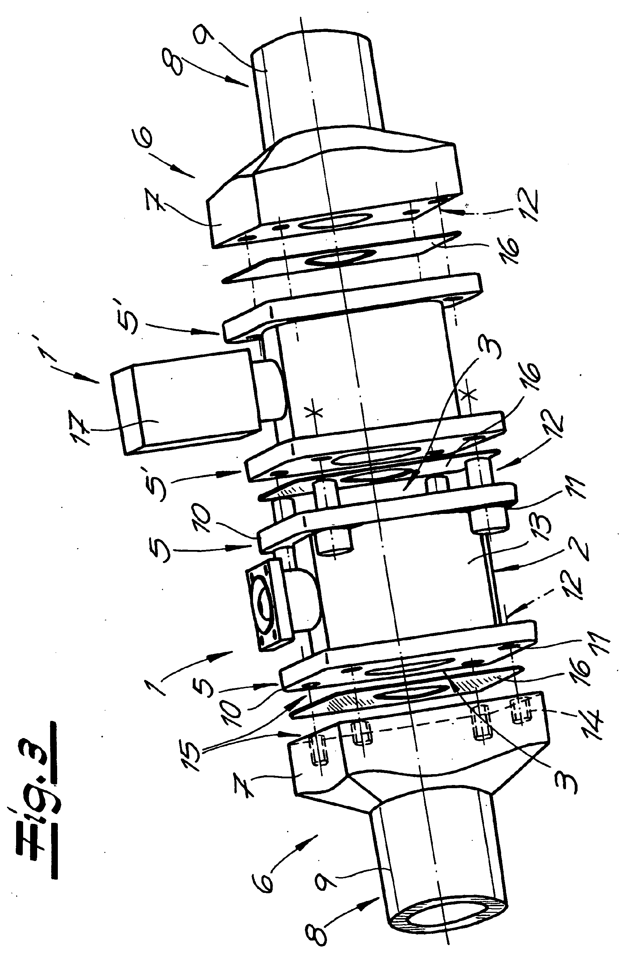

Die Figuren zeigen einen Bausatz zur Bereitstellung von Stellgeräten für Rohrleitungen von Heizungs- und Klimaanlagen. Der Bausatz weist mindestens ein Funktionselement 1 auf, das ein Gehäuse 2 mit einem Strömungsein- und einem Strömungsauslass 3 sowie einen im Gehäuse 2 beweglich angeordneten, an der Gehäuseaußenseite betätigbaren Ventilkörper 4 aufweist. In den Ausführungsbeispielen sind die Funktionselemente 1 als Kugelventile ausgebildet und weisen drehbeweglich angeordnete kugelförmige Ventilkörper 4 auf. Die Strömungsein- und auslässe 3 sind von Montageflächen 5 umgeben. Der Bausatz weist ferner rohrförmige Endstücke 6 auf, die an einem Ende einen Anschlusskopf 7 zur Befestigung an den Montageflächen 5 des Gehäuses 2 aufweisen und mit einem freien Anschlussende 8 ausgebildet sind, das anwendungsbezogen entsprechend einer für die Rohrleitung geltenden Norm festgelegt ist. Während in den Figuren 1 a und 1b die Anschlussenden 8 als Flansch ausgebildet sind, sind in den Figuren 2a und 2b die freien Anschlussenden 8 als einfaches Rohrstück ausgebildet, welches über eine Löt- oder Schweißverbindung in das Rohrleitungssystem integriert werden kann. In der Fig. 3 bestehen die freien Anschlussenden 8 aus einem mit einem Außengewinde 9 versehenen Rohrstück. Durch die unterschiedliche Gestaltung der freien Anschlussenden 8 kann das Funktionselement 1 universell in verschieden genormte Rohrleitungssysteme integriert werden. Die rohrförmigen Endstücke 6 können an die jeweils durch eine Rohrleitungsnorm festgelegte Einbaulänge angepasst werden. Den Figuren ist ferner zu entnehmen, dass die Montageflächen 5 an den Strömungsein- und auslässen 3 identisch ausgebildet sind. Die Montageflächen 5 sind als Montageplatten ausgebildet, die umfangsseitig überstehen und in dem überstehenden Rand 10 Bohrungen 11 für Schraubverbindungen 12 enthalten. Das Gehäuse 2 weist einen quaderförmigen oder zylindrischen Grundkörper 13 auf, der den Ventilkörper 4 enthält, wobei die Montageplatten 5 an den Stirnflächen des Grundkörpers 13 angeschweißt oder angeformt sind.

Die Funktionselemente 1 können Durchgangsventile, Mischventile, Trennventile oder Mehrwegeventile umfassen, wobei die Montageflächen 5 unabhängig von der Bauart identisch ausgebildet sind. Die Funktionselemente 1 können bei gleichen Außenabmessungen des Gehäuses 2 mit unterschiedlichen Ventilkörpern bestückt sein.

Der Anschlusskopf 7 der rohrförmigen Endstücke 6 ist mit den Schraubverbindungen 12 an der Montagefläche 5 befestigt und enthält zur Befestigung Gewindesackbohrungen 14. Der Anschlusskopf 7 der Endstücke 6 und die Montagefläche 5 weisen Dichtflächen 15 für die Anordnung von Flachdichtungen 16 oder alternativ Rundschnurdichtungen auf.

Im Ausführungsbeispiel der Fig. 3 sind zwei Funktionselemente 1, 1' dargestellt, die unmittelbar miteinander verbunden sind. An den freien Montageflächen 5, 5' dieser Anordnung werden die rohrförmigen Endstücke 6 befestigt. Die Funktionselemente 1, 1' sind mit unterschiedlichen Ventilkörpern bestückt. Sie können beispielsweise ein Absperrventil mit einem Regelventil, dem ein Stellantrieb 17 zugeordnet ist, kombiniert werden. Ferner besteht die Möglichkeit, die Funktionselemente mit einem zusätzlichen Funktionselement zu kombinieren, das ein identisch ausgebildetes Gehäuse mit Strömungsein- und auslass sowie ein Strömungskanal mit einem gehäusefesten Strömungseinbau, z. B. in Form einer Messblende oder Drossel, aufweist. Das in Fig. 3 dargestellt Prinzip erlaubt die Bildung von kompakten Regelstrecken aus mehreren Funktionselementen, beispielsweise auch unter Einbeziehung eines Druckreglers, Rückstandsklappe, Wärmemengenzählers, Volumenstrombegrenzers und dergleichen.

## Patentansprüche

1. Bausatz zur Bereitstellung von Stellgeräten für Rohrleitungen von Heizungs- und Klimaanlagen, bestehend aus:
a) mindestens einem Funktionselement (1), das ein Gehäuse (2) mit einem oder mehreren Strömungsein- und auslässen (3) sowie einen im Gehäuse (2) beweglich angeordneten, an der Gehäuseaußenseite betätigbaren Ventilkörper (4) aufweist, wobei die Strömungsein- und auslässe (3) von Montageflächen (5) umgeben sind;
b) rohrförmigen Endstücken (6), die an einem Ende einen Anschlusskopf (7) zur Befestigung an den Montageflächen (5) des Gehäuses (2) aufweisen und mit einem freien Anschlussende (8) ausgebildet sind, das anwendungsbezogen entsprechend einer für die Rohrleitung geltenden Norm festgelegt ist;
**dadurch gekennzeichnet, dass** die Montageflächen (5) als Montageplatten ausgebildet sind, die umfangseitig überstehen und in dem überstehenden Rand (11) Bohrungen für Schraubverbindungen (12) enthalten.

2. Bausatz nach Anspruch 1, **dadurch gekennzeichnet, dass** die Montageflächen (5) an den Strömungsein- und auslässen (3) identisch ausgebildet sind.

3. Bausatz nach Anspruch 1 oder 2, **dadurch gekennzeichnet, dass** das Gehäuse (2) einen zylindrischen oder quaderförmigen Grundkörper (13) aufweist, der den Ventilkörper (4) enthält, und dass die Montageplatten an den Stirnflächen des Grundkörpers (13) angeschweißt oder angeformt sind.

4. Bausatz nach einem der Ansprüche 1 bis 3, **dadurch gekennzeichnet, dass** die Funktionselemente (1) Durchgangsventile, Mischventile, Trennventile und Mehrwegeventile umfassen, wobei die Montageflächen (5) unabhängig von der Bauart identisch ausgebildet sind.

5. Bausatz nach einem der Ansprüche 1 bis 4, **dadurch gekennzeichnet, dass** die Funktionselemente (1) bei gleichen Außenabmessungen des Gehäuses (2) mit unterschiedlichen Ventilkörpern (4) bestückt sind.

6. Bausatz nach einem der Ansprüche 1 bis 5, **dadurch gekennzeichnet, dass** der Anschlusskopf (7) der rohrförmigen Endstücke (6) mit Schraubverbindungen an der Montagefläche (5) befestigbar ist und zur Befestigung Durchgangsbohrungen oder Gewindesackbohrungen (14) enthält.

7. Bausatz nach einem der Ansprüche 1 bis 6, **dadurch gekennzeichnet, dass** der Anschlusskopf (7) der Endstücke (6) und die Montagefläche (5) Dichtflächen (15) für die Anordnung von Flachdichtungen (16) oder Rundschnurdichtungen aufweisen.

8. Bausatz nach einem der Ansprüche 1 bis 7, **dadurch gekennzeichnet, dass** zusätzliche Funktionselemente vorgesehen sind, die ein Gehäuse mit Strömungsein- und auslass sowie einen Strömungskanal mit einem gehäusefesten Strömungseinbau, z. B. in Form einer Messblende oder Drossel, aufweisen, wobei der Strömungseinlass und der Strömungsauslass von Gehäuseflächen umgeben sind, die den Montageflächen entsprechen.

9. Verwendung eines Bausatzes nach einem der Ansprüche 1 bis 8 zur Bildung von kompakten Regelstrecken aus mehreren Funktionselementen für den Einbau in Rohrleitungen von Heizungs- und Klimaanlagen, wobei unterschiedliche Funktionselemente unmittelbar miteinander verbunden werden und an den freien Montageflächen dieser Anordnung rohrförmige Endstücke befestigt werden, deren freies Anschlussende anwendungsbezogen entsprechend einer für die Rohrleitung geltenden Norm festgelegt ist.

## Claims

1. Kit for supplying control devices for pipes of heating and air-conditioning systems, comprising:
a) at least one functional element (1) which has a housing (2) with one or more flow inlet and outlet (3) and a valve body (4) arranged movably in the housing (2) and capable of being actuated on the outside of the housing, wherein the flow inlet and outlet (3) are surrounded by assembly surfaces (5);
b) tubular end pieces (6) which at one end have a connecting head (7) for securing to the assembly surfaces (5) of the housing (2), and are designed with a free connecting end (8) which is established with specific reference to the application according to a standard applicable to the pipe;
**characterised in that** the assembly surfaces (5) are designed as assembly plates which project on the peripheral side and are provided on the projecting edge (11) with holes for screw connections (12).

2. Kit according to Claim 1, **characterised in that** the assembly surfaces (5) are designed identically on the flow inlet and outlet (3).

3. Kit according to Claim 1 or 2, **characterised in that** the housing (2) has a cylindrical or cuboid base element (13) which contains the valve body (4), and **in that** the assembly plats are welded or shaped onto the front faces of the base element (13).

4. Kit according to any one of Claims 1 to 3, **characterised in that** the functional elements (1) include through valves, mixing valves, separating valves and multi-way valves, wherein the assembly surfaces (5) are formed identically regardless of design.

5. Kit according to any one of Claims 1 to 5, **characterised in that** the functional elements (1) are fitted with different valve bodies (4) with the same outside dimensions of the housing (2).

6. Kit according to any one of Claims 1 to 5, **characterised in that** the connecting head (7) of the tubular end pieces (6) can be secured to the assembly surface (5) with screw connections, and is provided with through holes or threaded pocket holes (14) for securing purposes.

7. Kit according to any one of Claims 1 to 6, **characterised in that** the connecting head (7) of the end pieces (6) and the assembly surface (5) have sealing faces (15) for the arrangement of flat seals (16) or round cord seals.

8. Kit according to any one of Claims 1 to 7, **characterised in that** additional functional elements are provided which have a housing with flow inlet and outlet and a flow channel with a flow installation secured to the housing, e.g. in the form of a measuring diaphragm or throttle, wherein the flow inlet and flow outlet are surrounded by housing surfaces which correspond to the assembly surfaces.

9. Use of the kit according to any one of Claims 1 to 8 for forming compact control sections consisting of several functional elements for installation in pipes of heating and air-conditioning systems, wherein different functional elements are connected directly to each other and tubular end-pieces are secured to the free assembly surfaces of this device, the free connecting end of which end pieces is established with specific reference to the application according to a standard applicable to the pipe.

## Revendications

1. Kit pour la mise à disposition d'instruments de réglage pour des tuyauteries de systèmes de chauffage ou de climatisation, composé :
a) d'au moins un élément fonctionnel (1) comportant un boîtier (2) avec une ou plusieurs entrées et sorties d'écoulement (3), ainsi qu'un corps de soupape (4) disposé de façon mobile dans le boîtier (2), pouvant être actionné sur la face externe du boîtier, les entrées et sorties d'écoulement (3) étant entourées de surfaces de montage (5);
b) d'embouts tubulaires (6), comportant sur une extrémité une tête de raccordement (7) pour la fixation sur les surfaces de montage (5) du boîtier (2) et conçus avec une extrémité de raccordement libre (8), qui en fonction de l'application est déterminée selon une norme applicable pour la tuyauterie ;
**caractérisé en ce que** les surfaces de montage (5) sont conçues sous la forme de plaques de montage, qui débordent sur leur périphérie et qui dans le bord débordant (11) contiennent des perçages pour des assemblages par vis (12).

2. Kit selon la revendication 1, **caractérisé en ce que** les surfaces de montage (5) sont conçues de façon identique sur les entrées et sorties d'écoulement (3).

3. Kit selon la revendication 1 ou 2, **caractérisé en ce que** le boîtier (2) comporte un corps de base (13) cylindrique ou quadratique qui contient le corps de soupape (4) et **en ce que** les plaques de montage sont soudées ou formées par moulage sur les surfaces frontales du corps de base (13).

4. Kit selon l'une quelconque des revendications 1 à 3, **caractérisé en ce que** les éléments fonctionnels (1) comprennent des soupapes de passage, des soupapes mélangeuses, des soupapes de séparation et des soupapes à plusieurs voies, les surfaces de montage (5) étant conçues de façon identique, indépendamment du type de construction.

5. Kit selon l'une quelconque des revendications 1 à 4, **caractérisé en ce que** les éléments fonctionnels (1) sont équipés de différents corps de soupapes (4), alors que les dimensions extérieures du boîtier (2) restent les mêmes.

6. Kit selon l'une quelconque des revendications 1 à 5, **caractérisé en ce que** la tête de raccordement (7) des embouts tubulaires (6) peut être fixée par des assemblages par vis sur la surface de montage (5) et **en ce qu'**elle contient des alésages traversants ou des trous borgnes taraudés (14) pour la fixation.

7. Kit selon l'une quelconque des revendications 1 à 6, **caractérisé en ce que** la tête de raccordement (7) des embouts (6) et la surface de montage (5) comportent des surfaces d'étanchéité (15) pour l'agencement de garnitures plates (16) ou de joints toriques.

8. Kit selon l'une quelconque des revendications 1 à 7, **caractérisé en ce qu'**on a prévu des éléments fonctionnels supplémentaires, qui comportent un boîtier avec une entrée et une sortie d'écoulement, ainsi qu'une canalisation d'écoulement avec un ensemble d'écoulement encastré de façon fixe sur le boîtier, par exemple sous la forme d'un diaphragme de mesure ou d'un étranglement, l'entrée d'écoulement et la sortie d'écoulement étant entourées de surfaces du boîtier qui correspondent aux surfaces de montage.

9. Utilisation d'un kit selon l'une quelconque des revendications 1 à 8, pour la création de systèmes asservis compacts constitués de plusieurs éléments fonctionnels et destinés à être montés dans des tuyauteries de systèmes de chauffage et de climatisation, différents éléments fonctionnels étant directement reliés entre eux et des embouts tubulaires, dont l'extrémité de raccordement libre est déterminée en fonction de l'application, selon une norme applicable pour la tuyauterie étant fixés sur les surfaces de montage libres de cet agencement.
